# EUROPÄISCHE PATENTSCHRIFT

(11) **EP 1 357 153 B1**
(45) Veröffentlichungstag und Bekanntmachung des Hinweises auf die Patenterteilung: **16.01.2008**
(21) Anmeldenummer: 03008044.4
(22) Anmeldetag: 14.04.2003
(51) Int. Cl.: C08L 75/08, C08K 3/26, C08G 18/48, C25D 5/56

(54) **Modifizierte Polyurethane, ein Verfahren zu ihrer Herstellung und ihre Verwendung**
Modified polyurethane, process for the production thereof and use thereof
Polyuréthane modifié, son procédé de production et son utilisation

(30) Priorität: 26.04.2002 DE 10218594
(43) Veröffentlichungstag der Anmeldung: 29.10.2003
(73) Patentinhaber: Bayer MaterialScience AG, 51368 Leverkusen (DE)
(72) Erfinder: Arntz, Hans-Detlef, Dr., 53797 Lohmar (DE); Mayer, Eduard, Dr., 41539 Dormagen (DE); Meyer, Helmut, Dr., 51519 Odenthal (DE)

(56) Entgegenhaltungen:
- EP-A- 0 568 388
- DE-A- 4 110 976
- US-A- 5 216 062
- DATABASE WPI Week 199512, 21. April 1995 (1995-04-21) Derwent Publications Ltd., London, GB; AN 1995-088257 XP002246979 & RU 2 015 145 C (NII ELEKTRONNYKH MATERIALOV), 30. Juni 1994 (1994-06-30)

## Beschreibung

Die Erfindung betrifft modifizierte Polyurethane (PU) auf Basis von Polyurethanreaktivsystemen aus organischen Polyisocyanaten und Polyolformulierungen, die zusätzlich Polymermodifikatoren und Füllstoffe enthalten, ein Verfahren zu ihrer Herstellung sowie ihre Verwendung bei der Galvanisierung oder Metallisierung.

Die Herstellung von Polyurethan-Formkörpern ist seit langem bekannt (z.B. aus Polyurethane Kunststoffhandbuch 7, Carl Hanser Verlag München-Wien 1983).

In DE-A 4 110 976 werden mit sogenannten Polymermodifikatoren modifizierte Polyisocyanate zur Herstellung von PU-Formkörpern eingesetzt.

Als Kunststoffe, die mit galvanisch abgeschiedenen Metallschichten versehen werden, werden bisher Acrylnitril-Butadien-Styrol-Copolymerisate (ABS) eingesetzt (Ullmann's Enzyclopedia of Industrial Chemistry). Dabei werden nach dem thermoplastischen Spritzgussverfahren aus den genannten ABS-Copolymerisaten Formteile hergestellt, die anschließend in Galvanisierverfahren mit einer Metalloberfläche beschichtet werden. Diese beschichteten Formteile werden im Sanitärbereich, beispielsweise als Armaturen, Griffe und Handtuchhalter oder im Automobilbereich, z.B. als Zierelemente (Schriftzüge, Mercedesstern) und Kühlergrill etc. eingesetzt. Zwar werden auch PU-Formkörper auf diese Weise beschichtet, jedoch ist die Haftung der Metallschicht auf dem PU (Polyurethan) sehr schlecht (Metallisieren von Kunststoffgehäusen unter EMV-, Umwelt- und Recyclingaspekten, 1. Auflage 1998, von Prof. Dr.-Ing. Ernst Habinger, Dr.-Ing. Autor Singh Sidhu, Leuze-Verlag).

In DE-A 195 17 338 wird die Herstellung eines aus Kunststoffen geformten Verbunderzeugnisses beschrieben, das mit einer selektiven Metallbeschichtung versehen ist. Das Erzeugnis besteht aus mindestens zwei Teilen aus unterschiedlichen Polymeren, wobei ein Teil aus einem beschichtbaren Kunststoff und ein zweites Teil aus einem nicht beschichtbaren Kunststoff besteht, welches über das erste Teil so geformt wird, dass ein Bereich des ersten Teiles nicht bedeckt wird. Anschließend wird eine metallische Beschichtung auf dem unbedeckten Bereich des ersten Teils aufgebracht. Als nicht beschichtbarer Kunststoff wird Polyurethan genannt, während als beschichtbarer Kunststoff ein ABS/PC-Kunststoff beschrieben wird.

Aufgabe der vorliegenden Erfindung war es, modifizierte Polyurethane zur Verfügung zu stellen, die einfach galvanisiert bzw. metallisiert werden können und bei denen die aufgebrachte Metallschicht gut haftet.

Die Aufgabe konnte mit modifizierten Polyurethanen gelöst werden. Überraschend wurde gefunden, dass bereits geringe Mengen an ABS in den Polyurethanen, bevorzugt in Kombination mit organischen oder anorganischen Füllstoffen, die in den eingesetzten Beizlösungen der Kunststoffgalvanotechnik löslich sind, dazu führen, dass diese entsprechend modifizierten Polyurethane bzw. die daraus hergestellten Formkörper metallisiert/galvanisiert werden können und dass die Metallschichten gut auf dem modifizierten Polyurethan haften.

Gegenstand der Erfindung sind modifizierte Polyurethane bestehend aus
i) mindestens einem Polyurethan erhältlich aus organischen Polyisocyanaten, Polyolen und gegebenenfalls Kettenverlängerern und/oder Vernetzern,
ii) mindestens einem Polymermodifikator bestehend aus mindestens einem in organischen Polyisocyanaten dispergierbaren, quellbaren Pfropfkautschuk einer teilchenförmigen Struktur, welcher zu 20 bis 80 Gew.-% aus einem Kautschukpolymerisat einer unter 0°C liegenden Glasübergangstemperatur und zum Rest aus aufgepfropften Vinyl- und/oder Acrylmonomeren besteht,
iii) mindestens einem Füllstoff, der in Beizlösungen der Kunststoffgalvanotechnik löslich ist, eine mittlere Teilchengröße von 0,02 bis 0,5 µm und eine Schüttdichte von 170 bis 500 kg/m³ aufweist,
iv) gegebenenfalls weiteren üblichen Katalysatoren, Hilfsmitteln und Zusatzstoffen.

Bei den als Komponente i) eingesetzten Polyurethanen handelt es sich sowohl um thermoplastisch verarbeitbare Polyurethane als auch um Polyurethane, die nach dem RIM-Verfahren (Reaction-Injection-Moulding-Prozess) oder nach dem Gießverfahren zu Formteilen verarbeitbar sind.

Ein weiterer Gegenstand der Erfindung ist ein Verfahren zur Herstellung der erfindungsgemäßen modifizierten Polyurethane, welches dadurch gekennzeichnet ist, dass gegebenenfalls in Gegenwart eines Katalysators
a) eine Polyisocyanatkomponente bestehend aus
   a1) mindestens einem gegebenenfalls modifizierten, organischen Polyisocyanat mit einem NCO-Gehalt von 5 bis 50 Gew.-%, bevorzugt 15 bis 48 Gew.-%,
   a2) gegebenenfalls üblichen Hilfs- und Zusatzstoffen mit
b) einer Polyolkomponente bestehend aus
   b1) mindestens einer Komponente aus der Gruppe bestehend aus langkettigen Polyethern, Polyetheraminen und Polyestern mit einer OH-Funktionalität von 2 bis 6 und einem zahlenmittleren Molekulargewicht von 1000 bis 12000 g/mol (Dalton),
   b2) gegebenenfalls mindestens einer Komponente aus der Gruppe bestehend aus kurzkettigen Polyolen und Polyaminen mit OH- bzw. NH-Funktionalitäten von 2 bis 6 und Molekulargewichten von 60 bis 600,
   b3) gegebenenfalls weiteren Hilfs- und Zusatzstoffen
   umgesetzt wird unter Hinzufügung von
c) mindestens einem Polymermodifikator bestehend aus mindestens einem in der Komponente a1) dispergierbaren, quellbaren Pfropfkautschuk einer teilchenförmigen Struktur, welcher zu 20 bis 80 Gew.-% aus einem Kautschukpolymerisat einer unter 0°C liegenden Glasübergangstemperatur und zum Rest aus aufgepfropften Vinyl- und/oder Acrylmonomeren besteht, und
d) mindestens einem Füllstoff, der in Beizlösungen der Kunststoffgalvanotechnik löslich ist, eine mittlere Partikelgröße von 0,02 bis 0,5 µm und eine Schüttdichte von 170 bis 500 kg/m³ aufweist.

Die erfindungsgemäßen modifizierten Polyurethane werden als Basismaterial bei der Galvanisierung/Metallisierung der daraus hergestellten PU-Formkörper eingesetzt. Hierbei entstehen metallisierte PU-Formkörper, deren metallische Beschichtung sehr gut am Kunststoffgrundkörper haftet.

Die erfindungsgemäßen modifizierten Polyurethane werden vorzugsweise folgendermaßen hergestellt:
I) Bevorzugte Herstellungsvarianten der eingesetzten Polyisocyanatkomponente a), die auch gleichzeitig den Polymermodifikator c) enthält:
   A) bevorzugt wird der Polymermodifikator c) im Polyisocyanat a1) dispergiert; oder
   B) der Polymermodifikator c) wird vorzugsweise im Polyisocyanat a) dispergiert, anschließend wird dieses Gemisch mit einem Teil des Polyols b) zu einem NCO-Prepolymer umgesetzt; oder
   C) ein NCO-Prepolymer wird bevorzugt aus einem Teil des Polyols b) und dem Polyisocyanat a) hergestellt, und der Polymermodifikator c) wird darin anschließend dispergiert; oder
   D) ein NCO-Prepolymer wird vorzugsweise durch gleichzeitiges Vermischen des Polymermodifikators c), einem Teil des Polyols b) und dem Polyisocyanat a) hergestellt.

Die vorgenannten Varianten A) bis D) werden üblicherweise zwischen Raumtemperatur und 120°C, bevorzugt zwischen 40 und 90°C, besonders bevorzugt zwischen 65 und 85°C durchgeführt, bis der zu erwartende NCO-Wert erreicht ist. Werden aliphatische Polyisocyanate verwendet, so liegt der besonders bevorzugte Temperaturbereich zwischen 80 und 120°C.

Die unter A) bis D) modifizierten Isocyanatkomponenten werden anschließend mit der gegebenenfalls verbliebenen Polyolkomponente b) nach den in der Polyurethantechnik üblichen Reaktionsgieß- oder -spritzverfahren umgesetzt.

Der Füllstoff d) wird vorzugsweise der Polyolkomponente b) zugemischt.

Als Ausgangskomponente a1) für das erfindungsgemäße Verfahren und für die erfindungsgemäßen Polyurethane eignen sich aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

Q (NCO)ₙ

in der n = 2-4, und Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen aralipliatischen Kohlenwasserstoffrest mit 8-15, vorzugsweise 8-13 C-Atomen, bedeuten, z.B. Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanatomethyl-cyclohexan, 2,4- und 2,6-Hexahydrotoluylendiisocyanat sowie beliebige Gemische dieser Isomeren, Hexahydro-1,3- und -1,4-phenylen-diisocyanat, Perhydro-2,4'- und -4,4'-diphenyl-methan-diisocyanat, 1,3- und 1,4-Phenylendiisocyanat, 1,4-Duroldiisocyanat (DDI), 4,4'-Stilbendiisocyanat, 3,3'-Dimethyl-4,4'-biphenylendiisocyanat (TODI) 2,4- und 2,6-Toluylendiisocyanat (TDI) sowie beliebige Gemische dieser Isomeren, Diphenylmethan-2,4'- und/oder -4,4'-diisocyanat (MDI), oder Naphthylen-1,5-diisocyanat (NDI) geeignet.

Ferner kommen beispielsweise in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in GB-PS 874 430 und GB-PS 848 671 beschrieben werden, m- und p-Isocyanatophenylsulfonylisocyanate gemäß US-PS 3 454 606, perchlorierte Arylpolyisocyanate, wie sie in US-PS 3 277 138 beschrieben werden, Carbodiimidgruppen aufweisende Polyisocyanate, wie sie in US-PS 3 152 162 sowie in DE-OS 25 04 400, 25 37 685 und 25 52 350 beschrieben werden, Norbornan-diisocyanate gemäß US-PS 3 492 301, Allophanatgruppen aufweisende Polyisocyanate, wie sie in GB-PS 994 890, der BE-PS 761 626 und NL-A 7 102 524 beschrieben werden, Isocyanuratgruppen aufweisende Polyisocyanate, wie sie in US-PS 3 001 9731, in DE-PS 10 22 789, 12 22 067 und 1 027 394 sowie in DE-OS 1 929 034 und 2 004 048 beschrieben werden, Urethangruppen aufweisende Polyisocyanate, wie sie z.B. in der BE-PS 752 261 oder in US-PS 3 394 164 und 3 644 457 beschrieben werden, acylierte Harnstoffgruppen aufweisende Polyisocyanate gemäß DE-PS 1 230 778, Biuretgruppen aufweisende Polyisocyanate, wie sie in US-PS 3 124 605, 3 201 372 und 3 124 605 sowie in GB-PS 889 050 beschrieben werden, durch Telomerisationsreaktionen hergestellte Polyisocyanate, wie sie in US-PS 3 654 106 beschrieben werden, Estergruppen aufweisende Polyisocyanate, wie sie in GB-PS 965 474 und 1 072 956, in US-PS 3 567 763 und in DE-PS 12 31 688 genannt werden, Umsetzungsprodukte der oben genannten Isocyanate mit Acetalen gemäß DE-PS 1 072 385 und polymere Fettsäureester enthaltende Polyisocyanate gemäß US-PS 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z.B. das 2,4- und 2,6-Toluylendiisocyanat sowie beliebige Gemische dieser Isomeren ("TDI"), 4,4'-Diphenylmethandiisocyanat, 2,4'-Diphenylmethandiisocyanat, 2,2'-Diphenylmethandiisocyanat und Polyphenyl-polymethylen-polyisocyanate, wie sie durch Anilin-Formaldehyd-Kondensation und anschließende Phosgenierung hergestellt werden ("rohes MDI"), und Carbodiimidgruppen, Uretonimingruppen, Urethangrupppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Besonders bevorzugt werden im erfindungsgemäßen Verfahren jedoch modifizierte Polyisocyanate und Isocyanatgruppen aufweisende Prepolymere verwendet, mit einem NCO-Gehalt von 5 bis 50 Gew.-%, vorzugsweise von 15 bis 48 Gew.-%, besonders bevorzugt 15 bis 25 Gew.-%.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und diese der Reaktionsmischung erst zur Herstellung der PU-Formteile einzuverleiben.

Als langkettige Polyether b1) kommen in Frage Polyetherpolyole, Polyetheresterpolyole und Polyesterpolyole. Polyetherpolyole können nach bekannten Verfahren hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 6 reaktive Wasserstoffatome gebunden enthält oder durch kationische Polymerisation von Alkylenoxiden in Gegenwart von Lewis-Säuren wie Antimonpentachlorid oder Borfluorid-Etherat. Ebenso möglich ist auch der Einsatz des Doppel-Metall-Cyanid-Verfahrens, das in den Beispielen und Lehren der US 5,470,813 und US 5,482,908 beschrieben ist.

Geeignete Alkylenoxide enthalten 2 bis 4 Kohlenstoffatome im Alkylenrest. Beispiele sind Tetrahydrofuran, 1,2-Propylenoxid, 1,2- bzw. 2,3-Butylenoxid, vorzugsweise werden Ethylenoxid und/oder 1,2-Propylenoxid eingesetzt. Die Alkylenoxide können einzeln, alternierend nacheinander oder als Mischungen verwendet werden. Bevorzugt werden Mischungen aus 1,2-Propylenoxid und Ethylenoxid eingesetzt, wobei das Ethylenoxid in Mengen von 10 bis 50 % als Ethylenoxid-Endblock eingesetzt wird ("EO-cap"), so dass die entstehenden Polyole zu über 70% primäre OH-Endgruppen aufweisen. Als Startermolekül kommen Wasser und/oder 2- und 6-wertige Alkohole in Betracht, wie Ethylenglykol, 1,2-Propandiol und 1,3-Propandiol, Diethylenglykol, Dipropylenglykol, Ethandiol-1,4, Glycerin, Trimethylolpropan, Sorbit, Glucose, usw. Geeignete Polyetherpolyole, vorzugsweise Polyoxypropylen-polyoxyethylen-polyole, besitzen eine Funktionalität von 2 bis 6 und zahlenmittlere Molekulargewichte von 500 bis 18000, vorzugsweise 800 bis 12000.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90. vorzugsweise 70:30 bis 30:70, in den vorgenannten Polyetherpolyolen hergestellt werden, sowie Polyetherpolyol-Dispersionen, die als disperse Phase, üblicherweise in einer Menge von 1 bis 50 Gew.-%, vorzugsweise 2 bis 25 Gew.-%, enthalten: z.B. anorganische Füllstoffe, Polyharnstoffe, Polyhydrazide, tert.-Aminogruppen gebunden enthaltende Polyurethane und/oder Melamin.

Ebenfalls einsetzbar sind die den Angaben entsprechenden, aus der Polyurethanchemie an sich bekannten Aminopolyether, wie in den Beispielen und Lehren der EP 0 219 035 und EP 0 335 274 beschrieben.

Es können auch Polyetheresterpolyole zugesetzt werden. Diese werden erhalten durch Propoxylierung oder Ethoxylierung von Polyesterpolyolen vorzugsweise mit einer Funktionalität von 1 bis 6, insbesondere 1,8 bis 2,4 und einem zahlenmittleren Molekulargewicht von 400 bis 8 000, vorzugsweise 800 bis 4500.

Ebenfalls möglich ist der Einsatz von Polyetheresterpolyolen, die durch Veresterung von Polyetherpolyolen mit den unten angeführten organischen Dicarbonsäuren und zwei oder höherfunktionellen Alkoholen erhalten werden. Diese Polyetheresterpolyole weisen vorzugsweise eine Funktionalität von 2 bis 6, und ein zahlenmittleres Molekulargewicht von 400 bis 8 000, vorzugsweise 800 bis 4500 Dalton.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Malonsäure, Glutarsäure Adipinsäure, Korksäure, Azelainsäure, Sebacinsäure, Decandicarbonsäure, Maleinsäure, Fumarsäure, Phthalsäure, Isophthalsäure und Terephthalsäure und ähnliche. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure-mono- und/oder -diester von Alkoholen mit 1 bis 6 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35/35 bis 50/20 bis 32 Gew.-Teilen, und insbesondere Adipinsäure. Beispiele für zwei- und mehrwertige Alkohole sind Ethandiol, Diethylenglykol, 1,2- bzw. 1,3-Propandiol, Dipropylenglykol, Methyl- Propandiol-1,3, 1,4-Butandiol, 1,3-Butandiol,1,5-Pentandiol 1,6-Hexandiol, Neopentylglykol, 1,10-Decandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten Diole, insbesondere Mischungen aus Ethandiol, 1,4-Butandiol und 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z.B. o-Hydroxycapronsäure und Hydroxyessigsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder in Gegenwart von Veresterungskatalysatoren, zweckmäßigerweise in einer Atmosphäre aus Inertgasen, wie z.B. Stickstoff, Kohlenmonoxid, Helium, Argon, in Lösung und auch in der Schmelze bei Temperaturen von 150 bis 300°C, vorzugsweise 180 bis 230°C gegebenenfalls unter vermindertem Druck bis zu der gewünschten Säurezahl, die vorteilhafterweise kleiner als 10, vorzugsweise kleiner als 1 ist, polykondensiert werden.

Nach einem bevorzugten Herstellverfahren wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 10 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder deren Derivate mit mehrwertigen Alkoholen vorteilhafterweise im Molverhältnis von 1 : 1 bis 1,8, vorzugsweise 1 : 1,05 bis 1,2 polykondensiert. Die erhaltenen Polyesterpolyole besitzen vorzugsweise eine Funktionalität von 1 bis 3, insbesondere 1,8 bis 2,4 und ein zahlenmittleres Molekulargewicht von 400 bis 6000, vorzugsweise 800 bis 3500.

Als geeignete Polyesterpolyole sind ferner Hydroxylgruppen aufweisende Polycarbonate zu nennen. Als Hydroxylgruppen aufweisende Polycarbonate kommen solche der an sich bekannten Art in Betracht, die beispielsweise durch Umsetzung von Diolen, wie 1,2-Propandiol, 1,3-Propandiol, 1,3-Butandiol, 1,4-Butandiol, 1,6-Hexandiol, Diethylenglykol, Trioxyethylenglykol und/oder Tetraoxyethylenglykol mit Dialkylcarbonaten, Diarylcarbonaten, z.B. Diphenylcarbonat oder Phosgen hergestellt werden können.

Bevorzugt werden bei der Herstellung der erfindungsgemäßen Polyurethane di- und höherfunktionelle Polyesterpolyole mit einem zahlenmittlerem Molekulargewicht von 500 bis 6000, vorzugsweise von 800 bis 3500 und insbesondere von 1000 bis 3300 eingesetzt.

Zur Herstellung der erfindungsgemäßen Polyurethane können zusätzlich als Komponente b2) niedermolekulare difunktionelle Kettenverlängerer, tri- oder tetrafunktionelle Vernetzer oder Mischungen aus Kettenverlängerern und Vernetzern verwendet werden.

Derartige Kettenverlängerer und Vernetzer b2) werden eingesetzt zur Modifizierung der mechanischen Eigenschaften, insbesondere auch der Härte der PU-Formkörper. Geeignete Kettenverlängerer wie Alkandiole, Dialkylenglykole und Polyalkylenpolyole und Vernetzungsmittel, z.B. 3- oder 4-wertige Alkohole und oligomere Polyalkylen-polyole mit einer Funktionalität von 3 bis 4, besitzen üblicherweise Molekulargewichte < 600, vorzugsweise von 18 bis 400 und insbesondere von 60 bis 300. Als Kettenverlängerer vorzugsweise verwendet werden Alkandiole mit 2 bis 12, vorzugsweise 2, 4 oder 6 Kohlenstoffatomen, z B. 1,3-Butandiol, 1,6-Hexandiol, 1,7-Heptandiol, 1,8-Octandiol, 1,9-Nonandiol, 1,10-Decandiol und insbesondere Ethandiol, 1,4-Butandiol und Dialkylenglykole mit 4 bis 8 Kohlenstoffatomen, z.B. Diethylengykol und Dipropylengykol sowie Polyoxyalkylenglykole. Geeignet sind auch verzweigtkettige und/oder ungesättigte Alkandiole mit üblicherweise nicht mehr als 12 Kohlenstoffatomen, wie z.B. 1,2-Propandiol, 2-Methyl-1,3-Propandiol, 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons oder Resorcins, z.B. 1,4-Di-(β-hydroxyethyl)-hydrochinon oder 1,3-(β-Hydroxyethyl)-resorcin, Alkanolamine mit 2 bis 12 Kohlenstoffatomen wie Ethanolamin, 2-Aminopropanol und 3-Amino-2,2-dimethylpropanol, N-Alkyldialkanolamine, z.B. N-Methyl- und -N-Ethyl-diethanolamin, (cyclo)aliphatische Diamine mit 2 bis 15 Kohlenstoffatomen, wie 1,2-Ethylendiamin, 1,3-Propylendiamin, 1,4-Butylendiamin und 1,6-Hexamethylendiamin, Isophorondiamin, 1,4-Cyclohexamethylendiamin und 4,4'-Diaminodieyclohexylmethan, N-Alkyl-, N,N'-dialkylsubstituierte und aromatische Diamine, die auch am aromatischen Rest durch Alkylgruppen substituiert sein können, mit 1 bis 20, vorzugsweise 1 bis 4 Kohlenstoffatomen im N-Alkylrest, wie N,N'-Diethyl-, N,N'-Di-sec.-pentyl-, N,N'-Di-sec.-hexyl-, N,N'-Di-sec.-decyl- und N,N'-Dicyclohexyl-, (p- bzw. m-) -Phenylendiamin, N,N'-Dimethyl-, N,N'-Diethyl-, N,N'-Diisopropyl-, N,N'-Di-sec.-butyl-, N,N'-Dicyclohexyl-, -4,4'-diamino-diphenylmethan, N,N'-Di-sec.-butylbenzidin, Methylen-bis(4-amino-3-benzoesäuremethylester), 2,4-Chlor-4,4'-diamino-diphenylmethan, 2,4- und 2,6-Toluylendiamin.

Die Verbindungen der Komponente b2) können in Form von Mischungen oder einzeln eingesetzt werden. Verwendbar sind auch Gemische aus Kettenverlängerern und Vernetzern.

Die Härte der Polyurethane wird aus der erfindungsgemäßen Kombination der Komponenten a1) mit b1) und b2) in relativ breiten Mengenverhältnissen erhalten, wobei die Härte mit zunehmendem Gehalt an Komponente a1) und b2) in der Reaktionsmischung ansteigt.

Als Katalysator können dem Fachmann geläufige Aminkatalysatoren eingesetzt werden, z.B. tertiäre Amine wie Triethylamin, Tributylamin, N-Methyl-morpholin, N-Ethyl-morpholin, N,N,N',N'-Tetramethyl-ethylendiamin, Pentamethyl-diethylentriamin und höhere Homologe (DE-OS 26 24 527 und 26 24 528), 1,4-Diaza-bi-cyclo-[2,2,2]-octan, N-Methyl-N'-dimethylaminoethyl-piperazin, Bis-(dimethylaminoalkyl)-piperazine, N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-β-phenyl-ethyl-amin, Bis-(dimethylaminopropyl)-harnstoff, 1,2-Dimethylimidazol, 2-Methylimidazol, monocyclische und bicyclische Amidine, Bis-(dialkylamino)-alkylether sowie Amidgruppen (vorzugsweise Formamidgruppen) aufweisende tertiäre Amine gemäß DE-OS 25 23 633 und 27 32 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage. Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-OS 27 32 292. Als Katalysatoren können ferner Silaamine mit Kohlenstoff-Silizium-Bindungen, wie sie in US-PS 3 620 984 beschrieben sind, eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt. Erfindungsgemäß können auch organische Metallverbindungen, insbesondere organische Zinnverbindungen, als zusätzliche Katalysatoren mitverwendet werden. Als organische Zinnverbindungen kommen neben schwefelhaltigen Verbindungen wie Di-n-octyl-zinn-mercaptid vorzugsweise Zinn(II)-salze von Carbonsäuren wie Zinn(II)-acetat, Zinn(II)-octoat, Zinn(II)-ethylhexoat und Zinn(II)-laurat und Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Die Katalysatoren bzw. Katalysatorkombinationen werden in der Regel in einer Menge zwischen etwa 0,001 und 10 Gew.-%, insbesondere 0,05 bis 2 Gew.-% bezogen auf die Gesamtmenge an Verbindungen mit mindestens zwei gegenüber Isocyanaten reaktionsfähigen Wasserstoffatomen eingesetzt.

Bei der Komponente c) (Polymermodifikator) handelt es sich um Pfropfkautschuke, die aus einem Kautschukpolymerisat mit Glasübergangstemperaturen unter 0°C und auf den Kautschuk wenigstens partiell aufgepfropftem Polymerisat aus wenigstens einem Vinyl- oder Acrylmonomeren bestehen. Die als Polymermodifikatoren c) geeigneten Pfropfkautschuke weisen vorzugsweise eine teilchenförmige Struktur mit mittleren Teilchendurchmessern (d₅₀-Wert) von 0,1 bis 0,8 µm auf und kommen in Form entsprechender Pulver oder auch grobteilig, d.h. in Form von Agglomeraten derartiger Teilchen zum Einsatz. Die Pfropfkautschuke bestehen zu 20-80 Gew.-%, vorzugsweise 30 bis 75 Gew.-% aus einem Kautschuk der genannten Glasübergangstemperatur und zum Rest aus aufgepfropften Vinyl- und/oder Acrylmonomeren.

Als Kautschuke zur Herstellung der Pfropfkautschuke sind beispielsweise folgende geeignet: Dienmonomerkautschuke auf Basis von Butadien, Isopren, Chloropren, gegebenenfalls in Mischung mit bis zu 35 Gew.-% anderer Monomere wie Styrol, Acrylnitril oder Alkylmethacrylat, Olefinkautschuke auf Basis von Ethylen, Propylen, Isobutylen, Vinylacetat, Alkylacrylat und geringen Mengen Dienmonomer oder Alkylacrylatkautschuke auf Basis von Alkylacrylatmonomeren (insbesondere C₁-C₇ Alkylacrylat) gegebenenfalls in Mischung mit bis 10 Gew.-% anderer Vinyl- oder Alkylmonomeren und geeigneter Vernetzer. Besonders bevorzugte Pfropfkautschuke werden durch radikalische Pfropfung von Vinylmonomeren auf Kautschukpolymerisat, das wenigstens teilweise vernetzt vorliegt, erzeugt. Der eingesetzte Kautschuk hat vorzugsweise einen Gelgehalt von mindestens 30 Gew.-%.

Als aufzupfropfende Vinylmonomere eignen sich z.B. Monomere ausgewählt aus der Gruppe, bestehend aus Styrol, p-Methylstyrol α-Methylstyrol, Acrylnitril, Methacrylnitril, C1-6-Alkylmethacrylat, Vinylacetat, Vinylether, Maleinsäureanhydrid und Maleinsäureimiden, Methacrylamiden und Gemischen derartiger Monomerer. Besonders geeignet sind Styrolacrylnitrilkombinationen oder methylmethacrylathaltige Kombinationen als Pfropfmonomere.

Die Herstellung der als Komponente c) geeigneten Pfropfpolymeren erfolgt vorzugsweise mittels der bekannten radikalischen Emulsionspfropfpolymerisation.

Die Pfropfreaktion, die Emulsionspolymerisation und die Massepolymerisation sind in Ullmann Enzyklopädie, 4. Auflage, Band 19, Seiten 277-295 ausführlich beschrieben.

Pfropfprodukte im Sinne der vorliegenden Erfindung sind Polymerisate, die durch Polymerisation von Vinylmonomeren und/oder Acrylmonomeren in Gegenwart eines oder mehrerer verschiedener Kautschuke erzeugt werden. Bei dieser sogenannten Pfropfreaktion bilden sich echte Pfropfprodukte neben nicht gepfropften Anteilen des Vinyl-/Acrylpolymeren. Im Rahmen der Erfindung sind unter Pfropfkautschuk vor allem innige Gemische dieser beiden Komponenten zu verstehen.

Die Komponente c) wird vorzugsweise in einer Menge von 1 bis 30 Gew.-%, vorzugsweise 3 bis 20 Gew.-%, bezogen auf die Gesamtmenge an modifiziertem Polyurethan eingesetzt.

Bei einem Zusatz der Pfropfpolymerisate als Komponente c) in die Polyisocyanate a1) bilden sich Isocyanatkomponenten, in denen die Polymermodifikatoren c) aufgequollen und dispergiert vorliegen. Der Quellgrad der in der Komponente a1) dispergiert vorliegenden Polymermodifikatoren c) liegt im allgemeinen bei 2 bis 6. Die Bestimmung des Quellgrades dient zur Charakterisierung der Wechselwirkung von Polymeren mit Quellungsmitteln. Die Bestimmungsmethoden sind in Hoffmann, Martin Polymeranalytik I und II (1977) ISBN 3-13-5-19701-8, ISBN 3-13-5-19801-4 beschrieben.

Als Füllstoffe d) werden vorzugsweise solche, die sich in Beizlösungen der Kunststoffgalvanik lösen, z.B. auf Basis von verdünnten oder konzentrierten anorganischen Säuren oder Gemischen, z.B. Schwefelsäure, Chromschwefelsäure, Salzsäure und/oder Phosphorsäure, gut lösen, eingesetzt; beispielsweise Alkali- oder Erdalkalihalogenide, -sulfate,- carbonate, Zucker und andere. Bevorzugt werden Erdalkalicarbonate, wie z.B. Kreiden, Calcit oder Aragonit in pulverisierter Form mit einer mittleren Teilchengröße zwischen 0,02 bis 0,5 µm, bevorzugt 0,1-0,3 µm eingesetzt. Die Schüttdichte liegt vorzugsweise zwischen 170 bis 500 kg/m³. Der Füllstoff d) kann bei der Herstellung der Formkörper wahlweise der Komponente b1) oder der Komponente a1) zugesetzt werden, bevorzugt wird er jedoch b1) zugegeben. Die mit dem Füllstoff d) versetzte Komponente sollte jeweils während der Verarbeitung gerührt werden, um ein Sedimentieren zu verhindern.

Die Komponente d) wird vorzugsweise in einer Menge von 1 bis 30 Gew.-%, vorzugsweise 3 bis 20 Gew.-%, bezogen auf die Gesamtmenge an modifiziertem Polyurethan eingesetzt.

Die Erfindung soll anhand der nachfolgenden Beispiele näher erläutert werden.

In den nachfolgenden Beispielen beziehen sich die Mengenangaben auf Gewichtsteile der Komponenten.

### Beispiele

**Tabelle 1: Zusammensetzung der modifizierten Polyurethane**

| **Beispiel** | **1** | **2** | **3** | **4*** | **5*** |
|---|---|---|---|---|---|
| **Komponente** | | | | | |
| Polyol 1 | | | | | 71,5 |
| Polyol 2 | 35,68 | 29,97 | 43,34 | 36,4 | |
| Polyol 3 | 23,78 | 19,98 | | | |
| Calciumcarbonat | | 16,0 | | 16,0 | 18,0 |
| Ethandiol | | | | | 26,3 |
| Siliconstabilisator*¹ | | | | | 1,4 |
| Dabco^{®} 33LV*² | | | | | 0,7 |
| Dibutylzinndilaurat | | | | | 0,1 |
| Isocyanat 1 | 40,54 | 34,06 | | | |
| Isocyanat 2 | | | 56,66 | 47,6 | |
| Isocyanat 3 | | | | | 142 |

| | | | | | |
|---|---|---|---|---|---|
| * erfindungsgemäß *¹ Produkt von Goldschmidt: B 8411 *² Produkt von Air Products: 33 %ige Lösung von Diazabicyclooctan Polyol 1: Polyetherpolyol der OH-Zahl 28 durch Addition von Propylenoxid und Ethylenoxid (80:20 %) an Trimethylolpropan als Starter mit 90 % primären OH-Gruppen. Polyol 2: Polyetherpolyol der OH-Zahl 385 durch Addition von Propylenoxid an Trimethylolpropan als Starter. Polyol 3: Polyetherpolyol der OH-Zahl 35 durch Addition von Propylenoxid und anschließend Ethylenoxid (84,9 : 13,1) an Trimethylolpropan als Starter mit ca. 77 % primären OH-Gruppen. Calciumcarbonat: Schüttdichte von ca. 250 kg/m³ und einem mittleren Teilchendurchmesser von 0,3 µm Isocyanat 1: 70,0 % eines polymeren Isocyanats der Diphenylmethanreihe mit einem NCO-Gehalt von ca. 31,5 % wurden bei Raumtemperatur mit 30,0 % eines polymeren Isocyanats der Diphenylmethanreihe mit einem NCO-Gehalt von ca. 32,6 % gemischt. Isocyanat 2: 800 Tle. eines polymeren Isocyanats der Diphenylmethanreihe mit einem NCO-Gehalt von 32,6 % wurden in einer Rührapparatur vorgelegt und unter Stickstoff auf 80°C aufgeheizt. Danach wurden portionsweise 200 Tle. eines trockenen Acrylnitrilbutadienstyrol-Pfropfpolymers bestehend aus einem Kern aus vernetztem Butadien-Kautschuk mittlerer Teilchengröße von 0,4 um mit einer Pfropfhülle aus Styrol und Acrylnitril über einen Zeitraum von 2 Stunden eingetragen. Nach 4 Stunden Rührzeit wurde die homogene Dispersion über ein 200 µm Filtertuch filtriert. NCO-Gehalt: 26,0 %; Viskosität bei 25°C: 4500 mPa.s Isocyanat 3: 850 Tle. eines Carbodiimid modifizierten 4,4'Diphenylmethandiisocyanat mit einem NCO-Wert von ca. 30 % wurden in einer Rührapparatur vorgelegt und unter Stickstoff auf 80°C aufgeheizt. Danach wurden portionsweise 150 Teile eines trockenen Acrylnitrilbutadienstyrol-Pfropfcopolymers bestehend aus einem Kern aus vernetztem Butadien-Kautschuk mittlerer Teilchengröße von 0,4 µm mit einer Pfropfhülle aus Styrol und Acrylnitril über einen Zeitraum von 2 Stunden eingetragen. Nach 4 Stunden Rührzeit wurde die homogene Dispersion über ein 200 µm Filtertuch filtriert. NCO-Gehalt: 24,5 %; Viskosität bei 25°C: 630 mPa.s | | | | | |

### Herstellung der Polyurethane

### Beispiel 1

### Herstellung des Polyurethans ohne Füllstoff und ohne Polymermodifikator

Es wurden 35,68 Tle. Polyol 2 mit 23,78 Tle. Polyol 3 gemischt und in einer Planschliffbecher-Rührapparatur etwa 1h bei 80°C/< 5 mbar entwässert. Danach kühlte man auf ca. 30°C ab, gab 40,54 Tle. Isocyanat 1 dazu und homogenisierte unter Vakuum (< 5 mbar/mindestens 5 min) bis zur völligen Verträglichkeit der Komponenten. Dann wartete man 10 min, bis die noch vorhandenen Luftblasen an die Oberfläche steigen konnten.

Danach wurde die Reaktionsmasse in eine Form gegossen und bei 80°C über 24 Stunden ausgehärtet.

### Beispiel 2

### Herstellung des Polyurethans mit Füllstoff (Kreide)

29,97 Tle. Polyol 2 wurden bei Raumtemperatur mit 19,98 Tle. Polyol 3 gemischt. Man gab 16 Tle. CaCO₃ dazu und dispergierte etwa 10 min mit einem Mischer (Ultra-Turrax). Danach wurde die Dispersion in einem Planschliffbecher 1h bei 80°C/< 5 mbar entwässert.

Anschließend wurde auf ca. 30°C abgekühlt und 34,06 Tle. Isocyanat 1 dazu dosiert und die Mischung unter Vakuum (< 5 mbar/mindestens 5 min) homogenisiert, bis eine völlige Verträglichkeit der Komponenten erreicht wurde. Dann wartete man 10 min, bis die noch vorhandenen Luftblasen an die Oberfläche steigen konnten.

Danach wurde die Reaktionsmasse in eine Form gegossen und bei 80°C über 24 Stunden ausgehärtet.

### Beispiel 3

### Herstellung des Polyurethans mit Polymermodifikator (ABS)

43,34 Tle. Polyol 2 wurden in einer Planschliffbecher-Rührapparatur vorgelegt und etwa 1h bei 80°C/< 5 mbar entwässert. Danach kühlte man auf ca. 30°C ab, gab 56,66 Tle. Isocyanat 2 dazu und homogenisierte unter Vakuum (< 5 mbar/mindestens 5 min), bis eine völlige Verträglichkeit der Komponenten erreicht wurde. Dann wartete man 10 min, bis die noch vorhandenen Luftblasen an die Oberfläche steigen konnten.

Danach wurde die Reaktionsmasse in eine Form gegossen und bei 80°C über 24 Stunden ausgehärtet.

### Beispiel 4

### Herstellung des Polyurethans mit ABS und Kreide

36,40 Tle. Polyol 2 wurden mit 16 Tle. CaCO₃ gemischt und etwa 10 min mit dem Ultra-Turrax homogenisiert. Danach wurde die Mischung in eine Planschliffbecher-Rührapparatur übertragen und 1h bei 80°C/< 5 mbar entwässert. Anschließend wurde auf ca. 30°C abgekühlt, 47,60 Tle. Isocyanat 2 dazudosiert und die Mischung unter Vakuum (< 5 mbar/mindestens 5 min) homogenisiert, bis eine völlige Verträglichkeit der Komponenten erreicht wurde. Dann wartete man 10 min, bis die noch vorhandenen Luftblasen an die Oberfläche steigen konnten.

Danach wurde die Reaktionsmasse in eine Form gegossen und bei 80°C über 24 Stunden ausgehärtet.

### Beispiel 5

### Herstellung des Polyurethans mit ABS und Kreide nach dem RIM-Verfahren

Man legte 71,5 Gew.-Tle. Polyol 1 vor und setzte nacheinander die anderen in der Tabelle (Spalte 5) angegebenen Bestandteile (außer Isocyanat 3) unter ständigem Rühren zu. Die homogene Polyolformulierung wurde auf einer Hochdruckanlage mit dem Isocyanat 3 im angegebenen Mischungsverhältnis (118 Gew.-Tle. Polyolformulierung : 142 Gew.-Tle. Isocyanat 3) zu Formteilen mit einer Dichte von ca. 1100 kg/m³ umgesetzt.

Die mit den Formkörpern durchgeführten Galvanisierversuche zeigten, dass die Formkörper aus den Beispielen 1 bis 3 nicht haftfest galvanisierbar waren. Hingegen konnten die Formkörper aus den Beispielen 4 und 5 im Kunststoffgalvanisierverfahren haftfest metallisiert werden.

## Patentansprüche

1. Modifizierte Polyurethane bestehend aus
i) mindestens einem Polyurethan erhältlich aus organischen Polyisocyanaten, Polyolen und gegebenenfalls Kettenverlängerern und/oder Vernetzern,
ii) mindestens einem Polymermodifikator bestehend aus mindestens einem in organischen Polyisocyanaten dispergierbaren, quellbaren Pfropfkautschuk einer teilchenförmigen Struktur, welcher zu 20 bis 80 Gew.-% aus einem Kautschukpolymerisat einer unter 0°C liegenden Glasübergangstemperatur und zum Rest aus aufgepfropften Vinyl- und/oder Acrylmonomeren besteht,
iii) mindestens einem Füllstoff, der in Beizlösungen der Kunststoffgalvanotechnik löslich ist, eine mittlere Partikelgröße von 0,02 bis 0,5 um aufweist und eine Schüttdichte von 170 bis 500 kg/m³ hat,
iv) gegebenenfalls weiteren üblichen Hilfsmitteln und Zusatzstoffen und Katalysatoren.

2. Verfahren zur Herstellung eines modifizierten Polyurethans, **dadurch gekennzeichnet, dass** gegebenenfalls in Gegenwart eines Katalysators
a) eine Polyisocyanatkomponente bestehend aus
a1) mindestens einem gegebenenfalls modifizierten organischen Polyisocyanat mit einem NCO-Gehalt von 5 bis 50 Gew.-%, bevorzugt 15 bis 48 Gew.-%,
a2) gegebenenfalls üblichen Hilfs- und Zusatzstoffen mit
b) einer Polyolkomponente bestehend aus
b1) mindestens einer Komponente aus der Gruppe bestehend aus langkettigen Polyethern, Polyetheraminen und Polyestern mit einer OH-Funktionalität von 2 bis 6 und einem zahlenmittleren Molekulargewicht von 1000 bis 12000 g/mol (Dalton),
b2) gegebenenfalls mindestens einer Komponente aus der Gruppe bestehend aus kurzkettigen Polyolen und Polyaminen mit OH- bzw. NH-Funktionalitäten von 2 bis 6 und Molekulargewichten von 60 bis 600,
b3) gegebenenfalls weiteren Hilfs- und Zusatzstoffen
umgesetzt wird unter Hinzufügung von
c) mindestens einem Polymermodifikator bestehend aus mindestens einem in der Komponente a1) dispergierbaren, quellbaren Pfropfkautschuk einer teilchenförmigen Struktur, welcher zu 20 bis 80 Gew.-% aus einem Kautschukpolymerisat einer unter 0°C liegenden Glasübergangstemperatur und zum Rest aus aufgepfropften Vinyl- und/oder Acrylmonomeren besteht und
d) mindestens einem Füllstoff, der in Beizlösungen der Kunststoffgalvanotechnik löslich ist, eine mitllere Partikelgröße von 0,02 bis 0,5 µm aufweist und eine Schüttdichte von 170 bis 500 kg/m³ hat.

3. Verwendung der modifizierten Polyurethane gemäß Anspruch 1 als Basismaterial bei der Galvanisierung/Metallisierung der aus den modifizierten Polyurethanen erhaltenen Formkörper.

## Claims

1. Modified polyurethanes consisting of
i) at least one polyurethane obtainable from organic polyisocyanates, polyols and, optionally, chain extenders and/or crosslinkers,
ii) at least one polymer modifier consisting of at least one swellable graft rubber of particulate structure which is dispersible in organic polyisocyanates and consists of 20 to 80 wt.% of a rubber polymer having a glass transition temperature below 0°C and for the rest of grafted-on vinyl monomers and/or acrylic monomers,
iii) at least one filler which is soluble in pickling solutions used in the electroplating of plastics and has a mean particle diameter of 0.02 to 0.5 µm and a bulk density of 170 to 500 kg/m³,
iv) optionally further conventional auxiliary substances and additives and catalysts.

2. Process for the preparation of a modified polyurethane, **characterised in that**
a) a polyisocyanate component consisting of
a1) at least one optionally modified organic polyisocyanate having a NCO content of 5 to 50 wt.%, preferably 15 to 48 wt.%,
a2) optionally conventional auxiliary substances and additives,
is reacted, optionally in the presence of a catalyst, with
b) a polyol component consisting of
b1) at least one component from the group comprising long-chain polyethers, polyether amines and polyesters having a OH functionality of 2 to 6 and a number-average molecular weight of 1000 to 12,000 g/mole (daltons),
b2) optionally at least one component from the group comprising short-chain polyols and polyamines having OH and NH functionalities of 2 to 6 and molecular weights of from 60 to 600,
b3) optionally further auxiliary substances and additives,
with the addition of
c) at least one polymer modifier consisting of at least one swellable graft rubber of particulate structure which is dispersible in component a1) and consists of 20 to 80 wt.% of a rubber polymer having a glass transition temperature below 0°C and for the rest of grafted-on vinyl monomers and/or acrylic monomers, and
d) at least one filler which is soluble in pickling solutions used in the electroplating of plastics and has a particle diameter of 0.02 to 0.5 µm and a bulk density of 170 to 500 kg/m³.

3. Use of the modified polyurethanes according to claim 1 as base material in the electroplating/metallisation of the moulded bodies obtained from the modified polyurethanes.

## Revendications

1. Polyuréthanes modifiés consistant en
i) au moins un polyuréthane pouvant être obtenu à partir de polyisocyanates organiques, de polyols et éventuellement d'agents d'allongement de chaîne et/ou de réticulants,
ii) au moins un modificateur de polymère consistant en au moins un caoutchouc greffé gonflable, dispersible dans les polyisocyanates organiques d'une structure particulaire qui consiste à raison de 20 à 80 % en masse en un polymère de caoutchouc d'une température de transition vitreuse située en dessous de 0°C et pour le reste en monomères vinyliques et/ou acryliques appliqués par greffage,
iii) au moins une charge, qui est soluble dans les solutions d'attaque de la technique de galvanoplastie des matières plastiques, présente une taille particulaire moyenne de 0,02 à 0,5 µm et a une masse volumique apparente de 170 à 500 kg/m³ ;
iv) éventuellement d'autres, adjuvants et additifs et catalyseurs habituels.

2. Procédé pour produire un polyuréthane modifié, **caractérisé en ce que**, éventuellement en présence d'un catalyseur,
a) un composant polyisocyanate consistant en
a1) au moins un polyisocyanate organique éventuellement modifié ayant une teneur en NCO de 5 à 50 % en masse, de préférence de 15 à 48 % en masse,
a2) éventuellement des adjuvants et additifs habituels est mis à réagir avec
b) un composant polyol consistant en
b1) au moins un composant du groupe consistant en les polyéthers, les polyétheramines et les polyesters à longue chaîne ayant une fonctionnalité OH de 2 à 6 et une masse moléculaire moyenne en nombre de 1 000 à 12 000 g/mol (Dalton),
b2) éventuellement au moins un composant du groupe consistant en des polyols et polyamines à courte chaîne ayant des fonctionnalités OH ou NH de 2 à 6 et des masses moléculaires de 60 à 600,
b3) éventuellement d'autres adjuvants et additifs
avec addition de
c) au moins un modificateur de polymère consistant en au moins un caoutchouc greffé gonflable, dispersible dans le composant a1) d'une structure particulaire qui consiste à raison de 20 à 80 % en masse en un polymère de caoutchouc d'une température de transition vitreuse située en dessous de 0°C et pour le reste en monomères vinyliques et/ou acryliques appliqués par greffage, et
d) au moins une charge, qui est soluble dans les solutions d'attaque de la technique de galvanoplastie des matières plastiques, présente une taille particulaire moyenne de 0,02 à 0,5 µm et a une masse volumique apparente de 170 à 500 kg/m³.

3. Utilisation des polyuréthanes modifiés selon la revendication 1 comme matériau de base dans la galvanisation/métallisation des corps mis en forme obtenus à partir des polyuréthanes modifiés.
